# EUROPEAN PATENT APPLICATION

(11) **EP 2 587 099 A1**
(43) Date of publication of application: **01.05.2013**
(21) Application number: 12180477.7
(22) Date of filing: 14.08.2012
(51) Int. Cl.: F16J 15/12

(54) **Layered spline seal assembly for gas turbine**

(30) Priority: 26.10.2011 US 201113281614
(71) Applicant: General Electric Company, Schenectady, NY 12345 (US)
(72) Inventor: Morgan, Victor, Greenville, SC South Carolina 29615 (US); Rehg, Timothy J., Greenville, SC South Carolina 29615 (US); Sarawate, Neelesh N., Niskayuna, NY New York 12309 (US); Weber, David W., Greenville, SC South Carolina 29615 (US)
(74) Representative: Cleary, Fidelma

(57) **Abstract**

The present application thus provides a seal assembly (160) for a turbine. The seal assembly (160) may include a number of metal shim layers (310,330,350) and a number of non-metallic layers (290). A pair of the non-metallic layers (290) surrounds each metal shim layer (301,330,350).

## Description

### TECHNICAL FIELD

The present application and the resultant patent relate generally to gas turbine engines and more particularly relate to layered spline seal assemblies having non-metallic layers for improved temperature resistance.

### BACKGROUND OF THE INVENTION

Leakage of cooling flows between turbine components generally causes reduced power output and lower efficiency. For example, the hot combustion gases may be contained within the turbine by providing pressurized compressor air around the hot gas path contained by seals. Leaks may be caused by thermal expansion of certain components and relative movement between components during operation of the gas turbine. Leakage of high pressure cooling flows into the hot gas path thus may lead to detrimental parasitic losses. Overall efficiency thus may be improved by blocking the leakage locations while providing cooling flows only as required.

For example, spline seals may be used between adjacent stator parts in a ring assembly of a gas turbine. Current gas turbine spline seals use many different combinations and configurations of metal shims and metal wire mesh. Moreover, the lowest leakage rates may be achieved by using only thin metal shims without the wire mesh that may permit leakage therethrough. Although these thin metal shims may be appropriate for use in aviation engines, such spline seals may not be considered sufficiently robust for extended use in heavy duty gas turbine engines under full speeds and loads.

There is thus a desire for an improved spline seal for use in heavy duty gas turbine engines. Such a spline seal should be high temperature resistant, wear resistant, and sufficiently flexible so as to provide adequate sealing with a long component lifetime.

### SUMMARY OF THE INVENTION

The present invention resides in a seal assembly for a turbine. The seal assembly may include a number of metal shim layers and a number of non-metallic layers. A pair of the non-metallic layers surrounds each metal shim layer.

The present invention resides in turbine. The turbine may include a first stator, a second stator, and the above seal assembly positioned between the first stator and the second stator.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings in which:
Fig. 1 is a schematic view of a gas turbine engine showing a compressor, a combustor, and a turbine.
Fig. 2 is a partial side view of a turbine.
Fig. 3 is a side cross-sectional view of an example of a layered spline seal assembly as may be described herein and positioned between adjacent turbine components.
Fig. 4 is a side cross-sectional view of an alternative embodiment of a layered spline seal assembly as may be described herein and positioned between adjacent turbine components.

### DETAILED DESCRIPTION

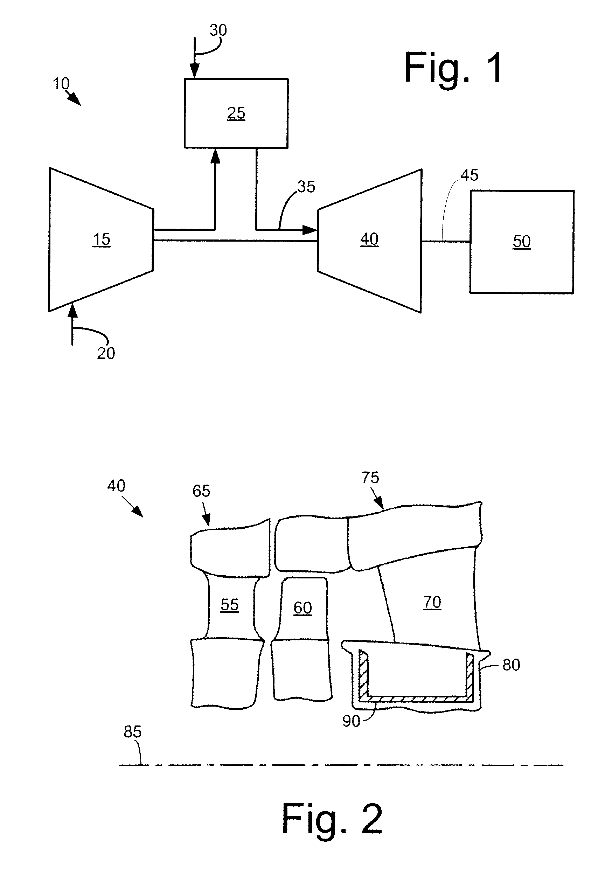

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, and/or other types of fuels. The gas turbine engine 10 may be any type of land based gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

Fig. 2 shows a portion of the turbine 40. Generally described, the turbine 40 may include a first stage nozzle 55 and a first stage bucket 60 of a first stage 65. Also shown is a second stage nozzle 70 of a second stage 75. Any number of stages may be used herein. The nozzles 70 may be positioned on a diaphragm 80. Any number of nozzles 70 and diaphragms 80 may be positioned circumferentially about an axis 85. A spline seal 90 may be positioned between each pair of adjacent diaphragms 80. The spline seals 90 may be used between adjacent diaphragms 80 or other turbine components so as to prevent the leakage of the cooling air flows 20 from the compressor 15 or elsewhere therethrough. As described above, the spline seals 90 may have many different configurations. Other types of sealing mechanisms also may be used. Other components and other configurations may be used herein.

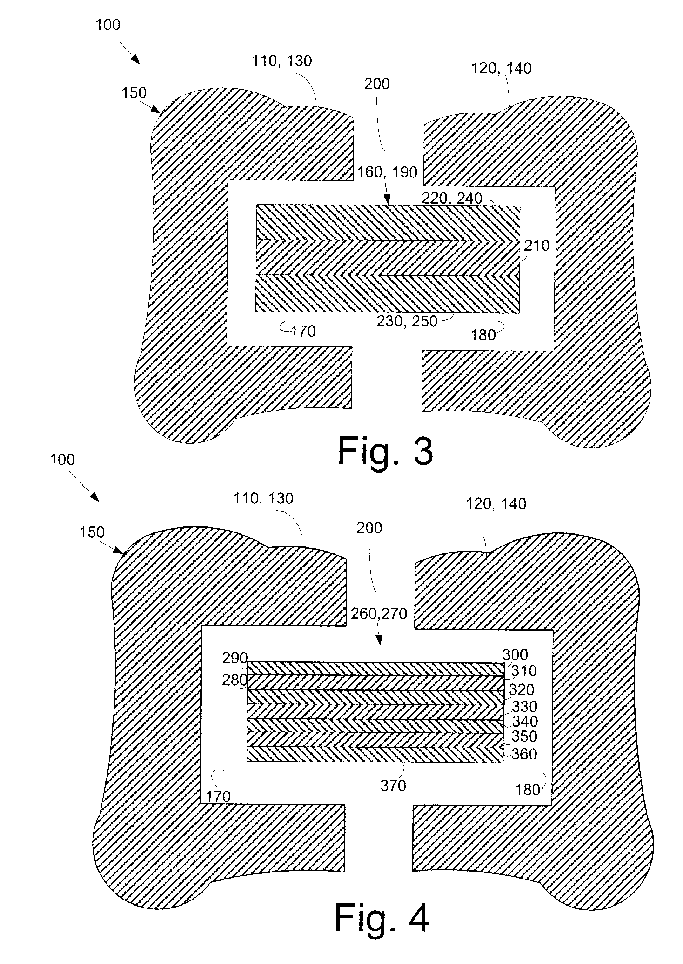

Fig. 3 shows portions of a turbine 100 as may be described herein. Specifically, a first turbine component 110 and a second turbine component 120 are shown. The turbine components 110, 120 may be a first diaphragm 130 and a second diaphragm 140 of a stator assembly 150 as described above or any other pair of adjacent components. Any number or type of the turbine components 110, 120 may be used herein. For example, other components may include shrouds, casings, nozzles, transition pieces, and the like.

The turbine 100 may include a seal assembly 160 positioned between the components 110, 120. The seal assembly 160 may extend from a first seal slot 170 in the first turbine component 110 to a second seal slot 180 in the second turbine component 120. The seal assembly 160 may include a spline seal 190 for use between the diaphragms 130, 140 and the like. The seal assembly 160 blocks a gap 200 between the components 110, 120 so as to prevent the escape of the cooling air flows 20 therethrough and the like. Other locations may be used herein.

In the example of Fig. 3, the seal assembly 160 may include a metal shim layer 210. The metal shim 210 may be made out of a high temperature resistant material such as stainless steel, a nickel based alloy, and the like. Other types of materials also may be used herein. The metal shim 210 may have any size, shape, or configuration. The seal assembly 160 also may have a first non-metallic layer 220 and a second non-metallic layer 230 positioned on either side of the metal shim 210. For example, a first mica layer 240 and a second mica layer 250 may be used. Other types of crystalline materials or other types of non-metallic materials with high temperature resistance may be used herein. For example, graphite also may be used. The non-metallic layers 220, 230 may have any size, shape, or configuration. Other components and other configurations may be used herein.

The non-metallic layers 220, 230 provide high temperature resistance and wear resistance in a flexible sealing medium. The metal shim layer 210 provides backing and support as well as a failsafe in case the non-metallic layers 220, 230 rupture or otherwise fail. The use of the two non-metallic layers 220, 230 on either side of the metal shim layer 210 provides for ease of manufacture and installation. Additional metal shim layers also may be used. The metal shim layer 210 and the non-metallic layers 220, 230 may be coupled via high temperature adhesives, high strength fasteners, welding, and other types of conventional means. Other components and other configurations may be used herein.

Fig. 4 shows a further embodiment of a seal assembly 260 as may be described herein. As above, the seal assembly 260 may be a spline seal 270 and the like. In this example, the seal assembly 260 includes a number of metal shim layers 280 and a number of non-metallic layers 290. As is shown, the seal assembly 260 includes a first non-metallic layer 300, a first metal shim layer 310, a second non-metallic layer 320, a second metal shim layer 330, a third non-metallic layer 340, a third metal shim layer 350, and a fourth non-metallic layer 360. Any number of metal shim layers 280 and non-metallic layers 290 may be used herein. The combination of the metal shim layers 280 and the non-metallic layers 290 add thickness to the overall seal assembly 260 while still maintaining flexibility. The metal shim layers 280 and the non-metallic layers 290 may be coupled via high temperature adhesives, high strength fasteners, welding, and other types of conventional means. Other components and other configuration also may be used herein.

The seal assemblies 160, 260 described herein thus provide the performance of a thin sheet spine seal while providing a robust seal in the context of the operation of a heavy duty gas turbine. The non-metallic layers described herein provide high temperature resistance, wear resistance, and flexibility while the metal shim layers provide backing and support while also providing a failsafe layer. The seal assemblies 160, 180 also provide for ease of installation in the seal assemblies 160, 260 may be installed in either direction. In other words, any of the non-metallic layers may act as a seal surface 370 facing the gap 200. The seal assemblies 160, 180 may be original equipment or part of a retrofit.

It should be apparent that the foregoing relates only to certain embodiments of the present application and the resultant patent. Numerous changes and modifications may be made herein by one of ordinary skill in the art without departing from the general spirit and scope of the invention as defmed by the following claims and the equivalents thereof.

## Claims

1. A seal assembly (160) for a turbine (40), comprising:
a plurality of metal shim layers (210); and
a plurality of non-metallic layers (290);
wherein a pair of the plurality of non-metallic layers (290) surrounds each metal shim layer of the plurality of metal shim layers (290).

2. The seal assembly of claim 1, wherein the plurality of non-metallic layers (290) comprises a plurality of mica layers (290).

3. The seal assembly of claim 1 or 2, wherein the plurality of metal shim layers (290) comprises a temperature resistant material.

4. The seal assembly of any of claims 1 to 3, wherein one of the plurality of non-metallic layers (290) comprises a sealing surface (370) facing a gap (200) between a first seal slot (270) and a second seal slot (180).

5. The seal assembly of claim 4, wherein the first seal slot (170) is positioned within a first turbine component (110) and the second seal slot (180) is positioned within a second turbine component (120).

6. The seal assembly of claim 5, wherein the first turbine component (110) comprises a first stator and the second turbine component (120) comprises a second stator.

7. The seal assembly of claim 5 or 6, wherein the first turbine component (110) comprises a first diaphragm (130) and the second turbine component (120) comprises a second diaphragm (140).

8. A turbine (40), comprising:
a first stator (110);
a second stator (120); and
a seal assembly (16) positioned between the first stator (110) and the second stator (120);
the seal assembly as recited in any of claims 1 to 7.

9. The turbine of claim 8 when dependent on any of claims 3 to 7, wherein the first seal slot (170) is positioned within the first stator (110) and the second seal slot (180) is positioned within the second stator (120).
